# EUROPÄISCHE PATENTSCHRIFT

(11) **EP 2 185 262 B1**
(45) Veröffentlichungstag und Bekanntmachung des Hinweises auf die Patenterteilung: **14.05.2014**
(21) Anmeldenummer: 08706864.9
(22) Anmeldetag: 04.02.2008
(51) Int. Cl.: B01D 29/72, B01D 33/03, D21D 5/02

(54) **DRUCKFILTER MIT VIBRATIONSANTRIEB**
PRESSURE FILTER WITH VIBRATOR
FILTRE COMPRENANT DES MOYENS DE VIBRATION

(30) Priorität: 30.08.2007 DE 102007041119
(43) Veröffentlichungstag der Anmeldung: 19.05.2010
(73) Patentinhaber: Röhren- und Pumpenwerk Bauer Gesellschaft mbH, 8570 Voitsberg (AT)
(72) Erfinder: EICHLER, Dietrich, 01824 Königstein/Sächs. Sch. (DE)
(74) Vertreter: Hager, Thomas Johannes
(86) Internationale Anmeldenummer: PCT/DE2008/000199
(87) Internationale Veröffentlichungsnummer: WO 2009/026861

(56) Entgegenhaltungen:
- WO-A-02/26348
- DE-C2- 19 939 338

## Beschreibung

### Anwendungsgebiet

Das Anwendungsgebiet der Erfindung bezieht sich auf die Klassierung oder Aufkonzentration von mit Fasern oder Feststoffen belasteten Flüssigkeiten mit Hilfe der Siebung beziehungsweise der Filtration.

Die Aufarbeitung und Rezirkulation von Produktions- und Abwässern aus verschiedenen Bereichen und Industriezweigen mit dem Ziel der sparsamen Verwendung von Wasser gewinnt immer mehr an Bedeutung.

Insbesondere in der Papierindustrie fallen bei der Wiederverwendung von Altpapieren mit Fasern oder Feststoffen belastete Flüssigkeiten an, die zu klassieren oder weiter aufzukonzentrieren sind.

Bei der Abtrennung von Feststoffen aus den Abläufen von Biogasanlagen und der Fest-Flüssig-Trennung von Gülle können mit dem Filter über die abgesiebte Flüssigkeit Schleimstoffe abgeschieden werden, so dass sich der aufkonzentrierte Strom mit Schneckenpressen leichter in eine feste und eine flüssige Phase umwandeln lassen.

### Charakterisierung der bekannten technischen Lösungen

In der Papierindustrie haben sich Druckfilter und Drucksortierer durchgesetzt, bei denen in einem Gehäuse die zu behandelnde Flüssigkeit durch einen Rotor einem ständig wechselnden, also oszillierenden Überdruck und Unterdruck ausgesetzt wird. Die Flüssigkeit wird durch das senkrecht stehende Loch- oder Stabsieb gepreßt. Beispiele dieser Anordnungen zeigen die Patentschriften DE 2757746 und DE 199 11 884 A1.

In der deutschen Patentanmeldung 199 39 338.9 wird ein Vibrationsfeinfilter vorgestellt, der ebenfalls in einem Gehäuse ein vertikales zylindrisches Sieb aufweist und anstelle des Rotors sich ein zylindrischer Vibrator mit horizontaler Beweglichkeit innerhalb des Siebes befindet. Auch hier werden im Rhythmus der Schwingung des Vibrators die Feststoffteilchen zum Sieb hin oszillierend senkrecht angelegt und abgehoben. Im Ringspalt zwischen Sieb und Vibrator wechseln ständig Unter- und Überdruck. Durch die kreisende Veränderung der Breite des Ringspaltes wird außerdem die Flüssigkeit in eine im Ringspalt langsam rotierende Bewegung versetzt. Das senkrecht stehende Loch- oder Stabsieb weist Öffnungen von 40 - 250 µm auf.

In dieser Ausführung ist der Vibrator an stangenförmigen Federelementen so aufgehängt, daß die Drehachse des Vibrators sich immer in einer senkrechten Lage befindet.

In der PCT Anmeldung WO 02/26348 A1 erfolgt eine Weiterentwicklung der genannten Vorrichtung als geschlossenes Gerät, wobei der Vibrator zum Sieb in achsparalleler Ausrichtung um die Mittelachse durch vier Doppelkardangelenke gehalten wird.

Darüber hinaus ist zur Unterstützung der Reinigung des Siebes zwischen dem Vibrator und dem Sieb ein Abstreifer angeordnet.

In den genannten Lösungen wird besonderer Wert auf eine genaue Führung der Vibrationseinheit auf einer horizontalen Kreisbahn gelegt.

Im praktischen Betrieb hat sich aber gezeigt, daß beim Bau solcher Vibrationsfeinfilter großer Wert auf die Massenverteilung der bewegten und der unbewegten Elemente der Maschine zu legen ist.

Einerseits treten beim Hochfahren der Unwuchtgewichte kritische Drehzahlen auf, die möglichst schnell durchfahren werden müssen. Besteht dazu keine Möglichkeit, verharrt die Einheit unter schüttelnden Drehbewegungen in einem unteren Drehzahlbereich, ohne die gewünschte Betriebsdrehzahl zu erreichen.

Andererseits taucht beim Befüllen des Feinfilters und beim Betrieb unterhalb der Leistungsgrenze der Vibrator nur zum Teil in die Flüssigkeit ein. Die vom Vibrator ausgehenden Massenkräfte wirken damit unsymmetrisch auf die Elemente der Maschine und überlasten die stangen- oder kardanartigen Verbindungen zwischen dem Gehäuse und dem Vibrator.

Auch im kontinuierlichen Betrieb des Feinfilters erfolgt eine weitere Störung des symmetrischen Kraftangriffes. Hinter dem Sieb befindet sich zum Abfließen der abgetrennten Flüssigkeit ein freier Raum.

Der bei jeder Umdrehung der Unwuchtgewichte entstehende Unterdruck zieht in den Abscheideraum die zu filternde Flüssigkeit von dem Sieb weg. Dadurch werden Anteile von Luft in entgegengesetzter Strömungsrichtung in den Abscheideraum gezogen. Diese mischen sich als kleine Luftblasen mit der zu siebenden Flüssigkeit und steigen nach oben. Für den Schwingungsprozeß bedeutet das, dass das spezifische Gewicht der Flüssigkeit nach oben hin abnimmt.

Hinzu kommt, daß durch die Kompresssiloilität der so eingeschlossenen Luft sich die Kraftübertragung beim Aufbau des Unter- und Überdruckes zwischen Vibrationseinheit und Sieb verändert. Damit steht in diesen Bereichen nicht nur weniger Masse zur Verfügung. Die mit Luft beladene Flüssigkeit ist nun auch kompresssibel und stört so den symmetrischen Kraftangriff.

Bei großen Feinfiltern besitzt außerdem der Vibrator im gefüllten Zustand einen Auftrieb, der von entgegen wirkenden Gummipuffern aufgefangen wird.

Bei den bisher bekannten Lösungen wurde davon ausgegangen, dass die Schwingungen des Vibrators gleichmäßig und horizontal auf die Siebfläche wirken und keine vertikalen Kräfte von den beweglichen Elementen, an dem der Vibrator hängt oder auf dem dieser abgestützt ist, in das Gehäuse übertragen werden.

Im praktischen Betrieb müssen aber die aus den beschriebenen unsymmetrischen Wirkungen herrührenden Kräfte von den nur horizontal beweglichen Führungselementen aufgenommen werden.

Bei einer Drehzahl der Unwuchtmassen des Vibrators von 3000 U/min bedeutet das, dass über eine Milliarde an Schwingungswechseln pro Jahr von diesen Elementen aufzunehmen sind.

Da bei einem Feinsieb mit 2 m² - Siebfläche Fliehkräfte von 0,5 -1 t zur Anwendung kommen, führt dieser Effekt nicht nur zur schnellen Zerstörung der entsprechenden Bauteile, sondern auch zu einem unruhigen und schwankenden Betriebsverhalten des Feinfilters und zu kaum beherrschbaren Sekundärschwingungen an anderen Elementen.

### Ziel der Erfindung

Das Ziel der Erfindung ist es, gegenüber den bekannten Lösungen die Aufhängung des zylindrischen Vibrators so zu verändern, daß einerseits eine genügende Bewegungsfreiheit für die vorrangig kreisförmige horizontale Bewegung des Vibrators gewährleistet wird.

Andererseits ist die Aufhängung des zylindrischen Vibrators so zu gestalten, daß die durch unsymmetrische Belastungen des Systems entstehenden Kräfte durch ein vertikales Ausweichen des Vibrators ausgeglichen werden können.

### Merkmale der Erfindung

Es wurde gefunden, daß für das Abfangen der durch unsymmetrische Belastungen des Systems entstehenden Seitenkräfte über das Schwingungsverhalten der zur verfügung stehenden Massen nur geringe vertikale Wege erforderlich sind.

Sie liegen in ihrer Größenordnung unter oder höchstens im Millimeterbereich.

Da die Massenkräfte entsprechend den obigen Darstellungen besonders im unteren Bereich wirken, wird die Anbindung der Vibrationseinheit an das Gehäuse auch im unteren Bereich der Maschine realisiert. In den beschriebenen Beispielen zum Stand der Technik wurden vertikal steife Maschinenelemente, wie speichenförmige Federstäbe oder Doppelkardangelenke eingesetzt.

Erfindungsgemäß kommen in kleinen Feinfiltern ohne Auftrieb zylindrische Gummipuffer zur Anwendung, die eine hohe horizontale Beweglichkeit besitzen, aber auch in einem gewissen Grade vertikal ausweichen können.

In großen Feinfiltern mit einem Auftrieb des Vibrators werden gummigepufferte kardanartige Elemente eingesetzt, die neben der vertikalen Beweglichkeit ebenfalls sowohl nach oben wie auch nach unten ausweichen können.

Es ist weiterhin vorgesehen, dass entsprechend der Drehrichtung der Vibrationseinheit die zu reinigende Flüssigkeit tangential in das Gehäuse einströmt und so die zu trennende Flüssigkeit auf einem spiralförmigen Weg durch den Ringspalt zwischen Vibrator und Sieb durch den Feinfilter gelangt.

Der aufkonzentrierte Schlamm wird im unteren Bereich ebenfalls entsprechend der Drehrichtung der Vibrationseinheit oder auch mittig am Gehäuseboden abgeführt.

### Ausführungsbeispiel

Die Erfindung wird nachfolgend anhand der Figur 1 bis 4 näher erläutert.

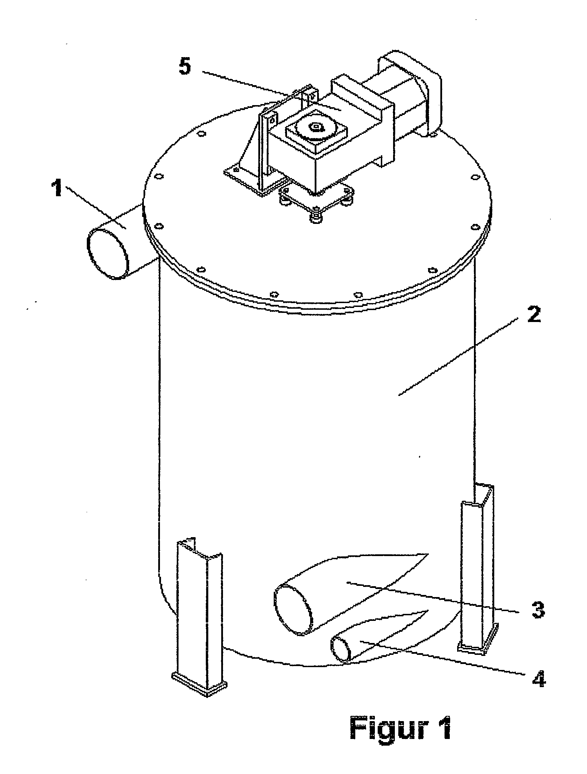

Zur besseren Übersicht zeigt die Figur 1 nur die perspektivische Ansicht des gesamten Feinfilters.
Figur 2 stellt einen Schnitt durch einen kleinen Feinfilter dar, der noch keinen Abstreifer zwischen Sieb und Vibrator besitzt.
Figur 3 zeigt einen Feinfilter, dessen Vibrator bei der Befüllung aufschwimmt und zwischen Sieb und Vibrator einen Abstreifer besitzt.

In der Figur 4 ist ein gummigepuffertes kardanartiges Verbindungselement dargestellt.

In der Figur 1 wird die zu reinigende Flüssigkeit über den Rohrstutzen (1) tangential und in gleicher Drehrichtung der Vibrationseinheit in die Maschine eingeleitet. Im Gehäuse (2) sind das Feinsieb und die Vibrationseinheit untergebracht. Über den Rohrstutzen (3) verlässt die gereinigte Flüssigkeit den Feinfilter. Der aufkonzentrierte Schlamm wird über den Rohrstutzen (4) tangential und in gleicher Strömungsrichtung kontinuierlich abgezogen.

Zur Unterstützung des Siebvorganges kann im Ringspalt zwischen dem Vibrator und dem Sieb ein Abstreifer angeordnet werden, der über das Motorgetriebe (5) angetrieben wird.

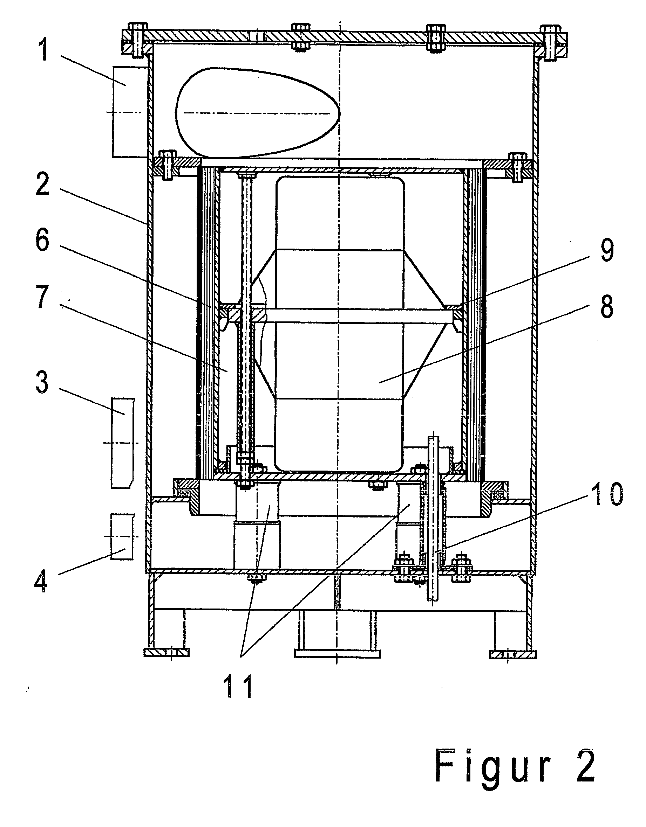

Figur 2 stellt einen Schnitt durch einen kleinen Feinfilter dar, dessen Vibrator schwerer als die verdrängte Flüssigkeitsmenge ist und in dem sich kein Abstreifer zwischen Vibrator und Schnecke befindet.

Wie in Figur 1 dargestellt, ist auch hier der Rohrstutzen (1) für die Einleitung der zu reinigenden Flüssigkeit und der Rohrstutzen (3) für den Ablauf der gereinigten Flüssigkeit zu erkennen. Über den Stutzen (4) verläßt die aufkonzentrierte Flüssigkeit die Maschine.

Im Gehäuse (2) ist das zylindrische Stabsieb (6) mit einer Siebfläche 0,75 m² angeordnet. Es besitzt eine Höhe von 350 mm und einen Durchmesser von 300 mm. Die ebenfalls zylindrische Vibrationseinheit (7) hat einen Durchmesser von 270 mm, so dass ein Ringspalt von 15 mm Breite entsteht.

Der Vibrationsmotor (8) ist an einem Flansch (9) der Vibrationseinheit (7) befestigt und erhält seine Stromversorgung über die flexible Kabeldurchführung (10).

Die erfindungsgemäße Aufgabe der in horizontaler und vertikaler Richtung beweglichen Aufhängung der Vibrationseinheit erfüllen drei auf einem Teilkreis von 200 mm und in einem Abstand von 120° angeordnete Gummipuffer (11).

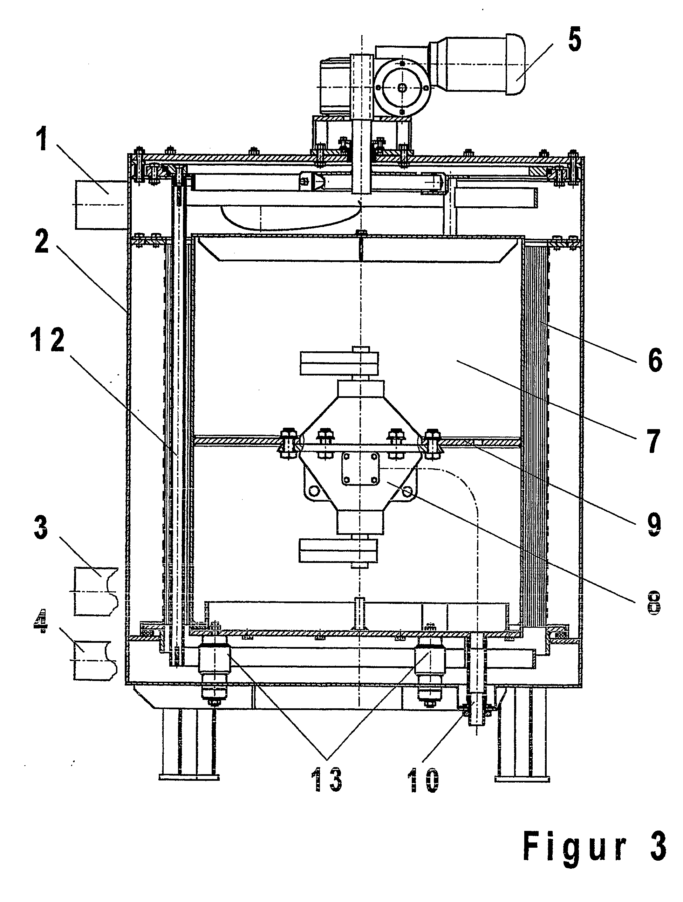

Figur 3 stellt einen Schnitt durch einen Feinfilter dar, in dem nachfolgend nicht beschriebene Positionen den Elementen in den Figuren 1 und 2 entsprechen.

In diesem Feinfilter erzeugt der Vibrator (7) durch seine Größe einen Auftrieb.

Zur Unterstützung der Reinigung des Siebes ist zwischen dem Vibrator (7) und dem Stabsieb (6) ein Abstreifer (12) angeordnet, der über das Motorgetriebe (5) angetrieben wird.

Im Gehäuse (2) ist das zylindrische Spaltsieb (6) mit einer Siebfläche von 2 m² angebracht. Es besitzt eine Höhe und einen Durchmesser des Siebes von 800 mm. Die ebenfalls 800 Millimeter hohe zylindrische Vibrationseinheit (7) hat einen Durchmesser von 700 mm.

Der Abstreifer (12) bewegt sich somit auf einer Kreisbahn zwischen der Vibrationseinheit (7) und dem Spaltsieb (6) in einem 50 mm breiten Ringspalt.

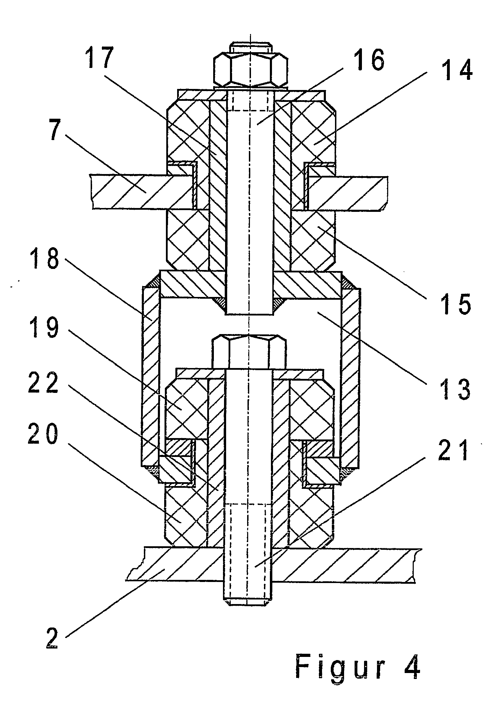

Die erfindungsgemäße Aufgabe der in horizontaler und vertikaler Richtung beweglichen Aufhängung der Vibrationseinheit (7) verfüllen drei gummigepufferte kardanartige Elemente (13), die in Figur 4 näher erläutert werden.

Figur 4 zeigt im Schnitt ein gummigepuffertes kardanartiges Element (13) zur Verbindung des Vibrators (7) mit dem Gehäuse (2).

Zwischen einem oberen Gummipuffer (14) und einem unteren Gummipuffer (15) ist mit Hilfe der Schraube (16) und der Distanzhülse (17) der Vibrator (7) eingespannt. An der Schraube (16) ist ein Zwischenkörper (18) angeordnet, in dem wiederum ein oberen Gummipuffer (19) und ein unterer Gummipuffer (20) mit Hilfe der Schraube (21) und einer weiteren Distanzhülse (22) die kardanartige Verbindung zwischen dem Gehäuse (2) und dem Vibrator (7) herstellt.

Neben der horizontalen Beweglichkeit können damit sowohl nach oben, wie nach unten gerichtete Kräfte aufgenommen werden.

## Patentansprüche

1. Vorrichtung zum Klassieren oder Aufkonzentrieren von mit Fasern oder Feststoffen belasteten Flüssigkeiten mit Hilfe der Siebung beziehungsweise der Filtration unter Nutzung eines in einem Gehäuse (2) in vertikaler Lage fest eingespannten zylindrischen Feinsiebes (6) mit loch- oder spaltförmigen Öffnungen, in dessen Inneren, einen Ringspalt bildend, ein zylindrischer Vibrator (7) mit vertikaler Achse angeordnet ist, in dem sich ein Vibrationsmotor (8) befindet, der kreisförmige horizontale Schwingungen ausführt und die zu behandelnde Flüssigkeit an einer Seite des Ringspaltes eingeleitet und die klassierte bzw. aufkonzentrierte Flüssigkeit auf der gegenüberliegenden Seite entnommen wird und die gereinigte bzw. mit Feinstoffen versehene Flüssigkeit zwischen dem Sieb (6) und der Gehäusewand abgeleitet wird,
**dadurch gekennzeichnet,**
**dass** die Vibrationseinheit (7) so an das Gehäuse (2) angebunden wird, dass neben der horizontalen Beweglichkeit eine vertikale Bewegungsfreiheit ermöglicht wird, wobei die horizontale und vertikale Beweglichkeit der Vibrationseinheit (7) von wenigstens drei Gummipuffern (11) übernommen wird, oder die horizontale und vertikale Beweglichkeit der Vibrationseinheit (7) von wenigstens drei gummigepufferten kardanartigen Elementen (13) übernommen wird, und wobei die Anbindung der Vibrationseinheit (7) an das Gehäuse (2) mittels der Gummipuffer (11) oder der kardanartigen Elemente (13) im unteren Bereich der Vorrichtung realisiert ist.

2. Vorrichtung nach Anspruch 1, **dadurch gekennzeichnet, dass** im gummigepufferten kardanartigen Element (13) zwischen einem oberen Gummipuffer (14) und einem unteren Gummipuffer (15) mit Hilfe einer Schraube (16) und einer Distanzhülse (17) der Vibrator (7) eingespannt ist und an der Schraube (16) ein Zwischenkörper (18) angeordnet ist, in dem wiederum ein oberer Gummipuffer (19) und ein unterer Gummipuffer (20) mit Hilfe einer weiteren Schraube (21) und einer weiteren Distanzhülse (22) die kardanartige Verbindung zwischen dem Vibrator (7) und dem Gehäuse (2) herstellt.

3. Vorrichtung nach Anspruch 1 oder 2, **dadurch gekennzeichnet, dass** entsprechend der Drehrichtung der Vibrationseinheit (7) die zu reinigende Flüssigkeit tangential in gleicher Richtung in das Gehäuse (2) einströmt und der aufkonzentrierte Schlamm in gleicher Strömungsrichtung aus dem Feinfilter (6) wieder abgezogen wird.

## Claims

1. An apparatus for classifying or concentrating liquids laden with fibers or solids by means of screening or filtration by using a cylindrical fine screen (6) having hole-shaped or slot-shaped openings, said screen being fixedly clamped in a housing (2) in a vertical position, in the interior of which a cylindrical vibrator (7) with vertical axis is arranged, in a manner forming an annular gap, in which a vibration motor (8) is disposed, which performs circular horizontal oscillations, and the liquid to be treated is introduced at one side of the annular gap and the classified or concentrated liquid is removed from the opposite side and the cleaned liquid or the liquid provided with fine particles is discharged between the screen (6) and the housing wall,
**characterized in**
**that** the vibration unit (7) is connected to the housing (2) such that a vertical mobility is enabled in addition to the horizontal mobility, wherein the horizontal and vertical mobility of the vibration unit (7) is assumed by at least three rubber buffers (11), or the horizontal and vertical mobility of the vibration unit (7) is assumed by at least three rubber-buffered Cardan-type members (13), and wherein the connection of the vibration unit (7) to the housing (2) by means of the rubber buffers (11) or the Cardan-type members (13) is realized in the lower portion of the apparatus.

2. The apparatus according to claim 1, **characterized in that** in the rubber-buffered Cardan-type member (13), the vibrator (7) is clamped between an upper rubber buffer (14) and a lower rubber buffer (15) by means of a screw (16) and a distance sleeve (17) and an intermediate body (18) is arranged at the screw (16), in which in turn an upper rubber buffer (19) and a lower rubber buffer (20) establish the Cardan-type connection between the vibrator (7) and the housing (2) by means of a further screw (21) and another distance sleeve (22).

3. The apparatus according to claim 1 or 2, **characterized in that** the liquid to be cleaned flows into the housing (2) tangentially in the same direction in accordance with the rotary direction of the vibration unit (7) and the concentrated sludge is drawn off again from the fine screen (6) in the same direction of flow.

## Revendications

1. Dispositif pour classer ou concentrer des liquides chargés en fibres ou en matières solides à l'aide d'un tamisage ou d'une filtration, en utilisant un tamis fin cylindrique (6) fixement monté en position verticale dans un boîtier (2) et doté d'ouvertures en forme de trous ou de fentes, tamis à l'intérieur duquel est disposé, en formant un interstice annulaire, un vibrateur cylindrique (7) ayant un axe vertical et dans lequel se trouve un moteur de vibration (8) qui accomplit des oscillations horizontales circulaires, sachant que le liquide à traiter est introduit sur un côté de l'interstice annulaire et que le liquide classé ou concentré est prélevé sur le côté opposé, et sachant que le liquide purifié ou pourvu de substances fines est évacué entre le tamis (6) et la paroi du boîtier, **caractérisé en ce que** l'unité de vibration (7) est reliée au boîtier (2) de telle sorte qu'une liberté de mouvement verticale est rendue possible en plus de la mobilité horizontale, sachant que la mobilité horizontale et verticale de l'unité de vibration (7) est assurée par au moins trois tampons en caoutchouc (11), ou que la mobilité horizontale et verticale de l'unité de vibration (7) est assurée par au moins trois éléments à la Cardan (13) montés sur tampons en caoutchouc, et sachant que la liaison de l'unité de vibration (7) au boîtier (2) au moyen des tampons en caoutchouc (11) ou des éléments à la Cardan (13) est réalisée dans la région inférieure du dispositif.

2. Dispositif selon la revendication 1, **caractérisé en ce que** le vibrateur (7) est serré dans l'élément à la Cardan (13) monté sur tampons en caoutchouc entre un tampon en caoutchouc supérieur (14) et un tampon en caoutchouc inférieur (15) à l'aide d'un boulon (16) et d'une douille d'écartement (17), et un corps intermédiaire (18) est disposé sur le boulon (16), corps dans lequel, à leur tour, un tampon en caoutchouc supérieur (19) et un tampon en caoutchouc inférieur (20) réalisent à l'aide d'un autre boulon (21) et d'une autre douille d'écartement (22) la liaison à la Cardan entre le vibrateur (7) et le boîtier (2).

3. Dispositif selon la revendication 1 ou 2, **caractérisé en ce que**, conformément au sens de rotation de l'unité de vibration (7), le liquide à purifier afflue tangentiellement dans le boîtier (2) dans le même sens, et la boue concentrée est évacuée du filtre fin (6) dans le même sens d'écoulement.
